# EUROPÄISCHE PATENTSCHRIFT

(11) **EP 1 517 816 B1**
(45) Veröffentlichungstag und Bekanntmachung des Hinweises auf die Patenterteilung: **23.08.2006**
(21) Anmeldenummer: 03720123.3
(22) Anmeldetag: 14.02.2003
(51) Int. Cl.: B60R 21/01

(54) **RÜCKHALTESYSTEM**
RETAINING SYSTEM
SYSTEME DE RETENUE

(30) Priorität: 18.06.2002 DE 10227061
(43) Veröffentlichungstag der Anmeldung: 30.03.2005
(73) Patentinhaber: ROBERT BOSCH GMBH, 70442 Stuttgart (DE)
(72) Erfinder: STUETZLER, Franz-Juergen, 48331 Farmington Hills (US)
(86) Internationale Anmeldenummer: PCT/DE2003/000449
(87) Internationale Veröffentlichungsnummer: WO 2003/106223

(56) Entgegenhaltungen:
- WO-A-03/026931
- DE-A- 19 739 655
- DE-A- 19 745 309
- US-A1- 2002 166 710
- US-A1- 2002 188 392

## Beschreibung

### Stand der Technik

Die vorliegende Erfindung betrifft ein Rückhaltesystem nach dem Oberbegriff des Patentanspruchs 1.

Rückhaltesysteme nach dem Stand der Technik bestimmen die Auslösung von Rückhaltemitteln mittels der Beschleunigung, die im Fahrgastraum auf dem Tunnel oder mit peripheren Sensoren im Aussenbereich des Fahrzeugs, zum Beispiel in den B-Säulen, gemessen wird. Zur Vermeidung von Fehlauslösungen werden üblicherweise zwei Beschleunigungssensoren für jede Sensierungsrichtung verwendet. Die Signale beider Sensoren werden miteinander verglichen, und nur, wenn beide Sensoren ein signifikantes Beschleunigungssignal messen, wird die Auslösung von Rückhaltemitteln, wie beispielsweise Airbags, zugelassen. Ein derartiges Rückhaltesystem ist aus der DE 197 39 655 A1 bekannt. Bei diesem bekannten Rückhaltesystem ist ein erster, beschleunigungsempfindlicher Sensor, vorgesehen, aus dessen Ausgangssignal ein erstes Auslösekriterium abgeleitet wird. Ein zweites Auslösekriterium wird aus dem Ausgangssignal mindestens eines weiteren Sensors gewonnen. Um eine hohe Betriebssicherheit des Rückhaltesystems zu erreichen, und insbesondere Fehlauslösungen zu verhindern, sind demnach immer mindestens zwei komplexe Sensorsysteme erforderlich.

Aus DE 197 45 309 A1 ist ein Unfall-Sensor zur Auslösung eines Kraftfahrzeug-Sicherheitssystems bekannt. Dieser umfasst an dem Fahrzeug befestigte, deformierbare Kunststoffteile, sowie ein Mikrophon, insbesondere einen Körperschallsensor. Bei einer Deformation der Kunststoffteile entsteht Körperschall, der im Frequenzbereich von 60 Hz bis 100 Hz gemessen wird.

Aus US 2002/027339 A1, die die Merkmale des Oberbegriffs des Anspruchs 1 zeigt, geht die Verwendung einer Ultraschallsensorik als Umfeldsensorik hervor. Dies soll primär bei einem Seitenaufprall aber auch bei einem Frontalaufprall helfen.

### Vorteile der Erfindung

Ein wesentlich einfacheres und dennoch betriebssicheres Rückhaltesystem ist durch die Merkmale des Patentanpruchs 1 gekennzeichnet. Die Erfindung geht dabei von der Erkenntnis aus, dass bei einem Unfall hochfrequente akustische Signale entstehen, die mittels eines elektroakustischen Wandlers in entsprechende elektrische Signale umgewandelt und auf das Vorliegen eines Unfallereignisses ausgewertet werden können. Hierbei kommt ein elektroakustischer Wandler, welcher als ultraschallsensor ausgeführt ist, zum Einsatz, da nach den Erkenntnissen der Anmelderin bei Unfallfallereignissen akustische Signale hoher Amplitude im Ultraschallbereich erzeugt werden. Aus diesen leicht auswertbaren Signalen lässt sich auf verhältnismässig einfache Weise ein zusätzliches Auslösekriterium für die Auslösung von Rückhaltemitteln ableiten.

Vorteilhafte Ausgestaltungen und Weiterbildungen der Erfindung gehen aus den Unteransprüchen hervor.

### Zeichnungen

Die Erfindung wird nachfolgend anhand der in der Zeichnung dargestellten Ausführungsbeispiele erläutert.

Es zeigen: Fig.1 in einem Diagramm das Ausgangssignal eines Ultraschallsensors als Funktion der Zeit bei einem Unfallversuch, Fig.2 ein erstes Ausführungsbeispiel der Erfindung, bei dem ein Ultraschallsensor im Steuergerät für die Innenraumsensierung angeordnet ist, Fig.3 ein zweites Ausführungsbeispiel, bei dem ein Ultraschallsensor im Airbagsteuergerät angeordnet ist und Fig.4 ein drittes Ausführungsbeispiel, bei dem ein Ultraschallsensor ebenfalls im Innenraum des Fahrzeugs aber ausserhalb des Airbagsteuergerätes angeordnet ist.

### Beschreibung der Ausführungsbeispiele

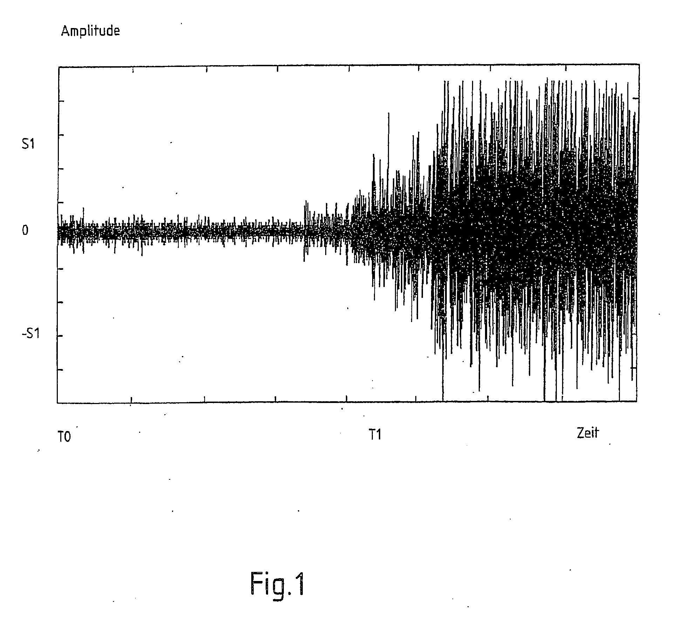

Fig.1 zeigt in einem Diagramm das Ausgangssignal eines elektroakustischen Wandlers, insbesondere eines Ultraschallsensors, als Funktion der Zeit bei einem Unfallversuch. Bei der Simulation verschiedenartigster Unfallarten von Fahrzeugen zeigt das Ausgangssignal eines derartigen Ultraschallsensors US hohe Amplitudenwerte in einem jenseits von etwa 50 kHz liegenden hohen Frequenzbereich. In dem in Fig.1 dargestellten Diagramm wird das Ausgangssignal des Ultraschallsensors US im Rahmen eines Crash-Versuchs ab dem Zeitpunkt T=T0 erfasst. Zum Zeitpunkt T=T1 prallt das Fahrzeug mit einer Geschwindigkeit von ca. 50 km/h gegen eine feste Barriere. Wie das Diagramm zeigt, steigt die Amplitude des Ausgangssignals des Ultraschallsensors US innerhalb sehr kurzer Zeit stark an und stellt somit ein vergleichsweise einfach auswertbares Signal dar. Das Entstehen derartiger Ultraschallsignale wird auf die Deformation und das Brechen von Teilen des Fahrzeugs bei dem Unfall zurückgeführt.

Ein Ultraschallsensor US, der im Inneren eines Fahrzeugs angeordnet ist, erfasst die bei einem Unfallereignis im Fahrzeug entstehenden Ultraschallsignale. Dabei kann der Ultraschallsensor im Airbagsteuergerät selbst, in einem anderen Steuergerät, zum Beispiel in dem für die Insassensensierung vorgesehenen Steuergerät, angeordnet sein. Alternativ kann der Ultraschallsensor auch als externer Sensor an fast beliebigen Orten im Innenraum des Fahrzeugs angeordnet sein. Falls der Ultraschallsensor im Airbagsteuergerät selbst eingebaut ist, wird das gemessene Signal zusammen mit den ebenfalls dort vorliegenden Signalen von Beschleunigungssensoren ausgewertet. Falls der Ultraschallsensor in einem anderen Steuergerät angeordnet ist, wird sein Ausgangssignal an das Airbagsteuergerät übertragen und dort ausgewertet. Eine besonders vorteilhafte Auswertung des Ausgangssignals des Ultraschallsensors kann in der Weise erfolgen, dass das Ausgangssignal zunächst in einem Tiefpassfilter gefiltert und dann mit einem vorgebbaren Schwellwert verglichen wird. Wird der Schwellwert überschritten, wird dies als Plausibilitätsentscheidung dafür gewertet, dass ein Unfallereignis stattfindet. Diese Plausibilitätsentscheidung wird mit den Ausgangssignalen weiterer Sensoren des Rückhaltesystems verknüpft. Falls sowohl das Ausgangssignal des Ultraschallsensors als auch die Ausgangssignale der weiteren Sensoren des Rückhaltesystems auf ein Unfallereignis schliessen lassen, wird die Auslösung von Rückhaltemitteln, wie Airbag, Gurtstraffer, freigegeben.

In vorteilhaften weiteren Ausgestaltungen der Erfindung kann das Ausgangssignal des Ultraschallsensors auch mittels Integration, Fenster-Integration, Bandpassfilterung, oder eine Kombination dieser Massnahmen, ausgewertet werden.

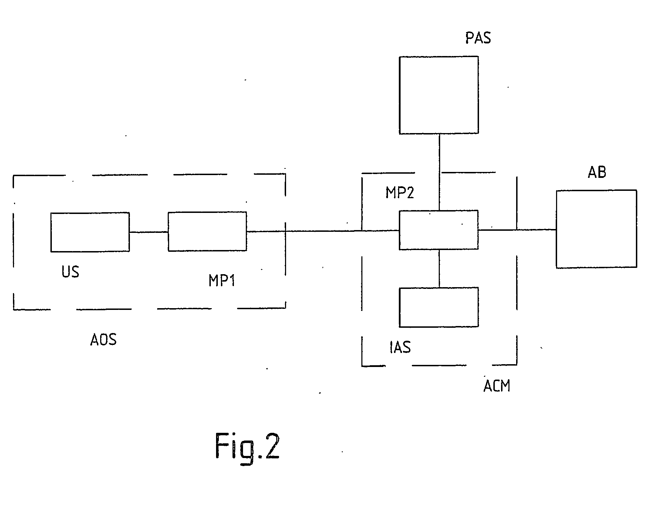

Ein erstes Ausführungsbeispiel der Erfindung, bei dem der Ultraschallsensor US in dem Steuergerät AOS für die Innenraumsensierung angeordnet ist, wird anhand von Fig.2 erläutert. Der Ultraschallsensor US ist mit einem ersten, in dem Steuergerät AOS angeordneten Mikroprozessor MP1 verbunden. Das Steuergerät AOS für die Innenraumsensierung ist mit dem Airbagsteuergerät ACM verbunden. In dem Airbagsteuergerät ACM sind ein zweiter Mikroprozessor MP2 und ein erster beschleunigungsempfindlicher Sensor IAS des Rüclchaltesystems angeordnet. Ein zweiter beschleunigungsempfindlicher Sensor PAS des Rückhaltesystems ist mit dem Airbagsteuergerät ACM verbunden. Bei dem ersten Sensor IAS handelt sich um einen im Inneren des Fahrzeugs angeordneten Sensor, während der zweite Sensor PAS extern angeordnet ist. Ausgangsseitig ist das Steuergerät ACM mit einem Rückhaltemittel AB, wie insbesondere Airbag, verbunden.

Das erste Ausführungsbeispiel der Erfindung funktioniert folgendermaßen. Bei einem Unfall sprechen die beschleunigungsempfindlichen Sensoren IAS und PAS an und geben jeweils ein entsprechendes Ausgangssignal ab. Zusätzlich erfasst der in dem Steuergerät AOS für die Insassensensierung angeordnete Ultraschallsensor US die durch Deformation und oder Bruch von Fahrzeugteilen entstehenden hochfrequenten Schallschwingungen und wandelt diese in ein entsprechendes elektrisches Ausgangssignal (Fig.1) um. Vorzugsweise werden dabei hochfrequente Schwingungen ab etwa 50 kHz ausgewertet, da diese besonders charakteristisch für Unfallereignisse sind. Das Ausgangssignal des Ultraschallsensors US wird einem in Fig.2 nicht dargestellten Tiefpassfilter zugeführt und dort gefiltert. Das so gefilterte Ausgangssignal wird schließlich einer Schwellwertschaltung zugeführt und dort mit einem vorgebbaren Schwellwert S1 verglichen. Liegt das gefilterte Ausgangssignal über dem vorgebbaren Schwellwert S1, wird dies als kritisches, auf einen Unfall hindeutendes Signal bewertet. Liefern alle drei Sensoren, IAS, PAS und US kritische, das heißt auf einen Unfall hindeutende Signale, spricht somit alles dafür, dass ein Unfall als plausibel anzunehmen ist und demzufolge die Rückhaltemittel AB, wie beispielsweise Airbag und/oder Gurtstraffer, ausgelöst werden müssen. Dieses erste Ausführungsbeispiel näch Fig.2 zeichnet sich insbesondere dadurch aus, dass es sehr kompakt und raumsparend ausgebildet ist, da der Ultraschallsensor US in dem Steuergerät für die Insassensensierung AOS angeordnet ist. Diese raurnsparende Bauweise ermöglicht besonders kurze elektrische Verbindungen zwischen dem Ultraschallsensor US und dem ersten Mikroprozessor MP1.

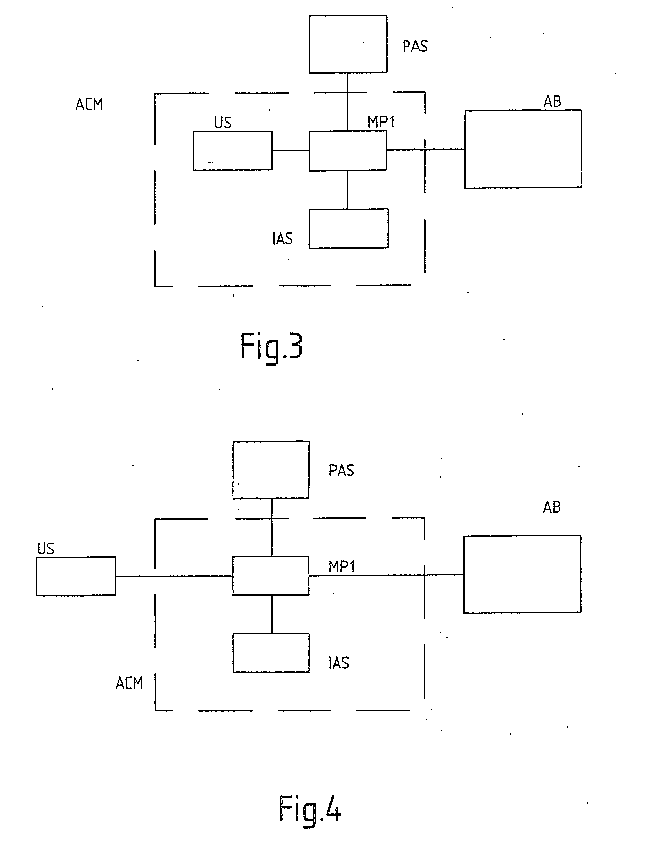

Ein zweites Ausführungsbeispiel der Erfindung wird unter Zuhilfenahme von Fig.3 erläutert. Dort ist als Blockschaltbild ein Airbagsteuergerät ACM dargestellt. Dieses Airbagsteuergerät ACM umfasst einen ersten, intern angeordneten Beschleunigungssensor IAS, und einen Mikroprozessor MP1. Mit dem Steuergerät ACM verbunden ist weiter ein ausgelagerter, beschleunigungsempfindlicher Sensor PAS. Ein Ultraschallsensor US ist unmittelbar in dem Steuergerät ACM angeordnet. Demzufolge ergibt sich, im Vergleich zu dem ersten Ausführungsbeispiel nach Fig.2, eine noch kompaktere Bauweise mit besonders kurzen Leitungsverbindungen zwischen den Sensoren IAS, US und dem für die Auswertung der Ausgangssignale dieser Sensoren zuständigen Mikroprozessor MP1.

Ein drittes Ausführungsbeispiel der Erfindung wird anhand von Fig. 4 erläutert. Wiederum ist ein Airbagsteuergerät ACM dargestellt, das einen beschleunigungsempfindlichen Sensor IAS und einen Mikroprozessor MP1 umfasst. Ein extern angeordneter Beschleunigungssensor PAS ist mit dem Steuergerät ACM verbunden. Weiterhin ist ein Ultraschallsensor US vorgesehen, der jedoch ausserhalb des Steuergerätes ACM angeordnet und mit diesem über eine Leitung verbunden ist. Dieses letzgenannte Ausführungsbeispiel der Erfindung baut zwar nicht so kompakt wie die zuvor unter Bezug auf die in Fig.2 und Fig.3 erläuterten Ausführungsbeispiele der Erfindung. Ein grosser Vorteil liegt jedoch darin, dass bei diesem Ausführungsbeispiel der Ultraschallsensor baulich unabhängig von den Steuergeräten ACM oder AOS an einem optimalen Montageort angeordnet werden kann. Dieses Ausführungsbeispiel ist daher besonders flexibel.

Bekanntlich kann auch ein Schlag gegen die Fahrzeugkarosserie, beispielsweise ein Steinschlag, oder auch das Überfahren eines Schlaglochs, Ultraschallschwingen erzeugen. Derartige Schwingungen klingen jedoch relativ schnell wieder ab. Um nun eine irrtümliche Auslösung von Rückhaltemitteln bei derartigen unschädlichen Ultraschallschwingungen mit Sicherheit auszuschliessen, wird in einer vorteilhaften weiteren Ausgestaltung der Erfindung zusätzlich eine Zeitschwelle vorgesehen. Das heisst, der Schwellwert S1 muss mindestens während eines Zeitintervalls ΔT überschritten sein, bevor das Ultraschallsignal als kritisch bewertet wird.

## Patentansprüche

1. Rückhaltesystem mit Rückhaltemitteln, mit mindestens einem beschleunigungsempfindlichen Sensor, sowie mit mindestens einem weiteren Sensor, wobei der mindestens eine weitere Sensor ein elektroakustischer Wandler ist, welcher als Ultraschallsensor (US) ausgeführt ist, der für bei einem Unfall entstehende Ultraschallwellen empfindlich ist und aus dessen Ausgangssignal ein Auslösekriterium für die Rückhaltemittel (AB) ableitbar ist, **dadurch gekennzeichnet, dass** der elektroakustische Wandler im Inneren eines Fahrzeugs angeordnet ist.

2. Rückhaltesystem nach Anspruch 1, **dadurch gekennzeichnet, dass** für das Ausgangssignal des Ultraschallsensors (US) ein Schwellwert (S1) vorgebbar ist, und dass das Überschreiten dieses Schwellwertes (S1) als ein Auslösekriterium für die Rückhaltemittel (AB) gewertet wird.

3. Rückhaltesystem nach Anspruch 1, **dadurch gekennzeichnet, dass** das Ausgangssignal des Ultraschallsensors (US) für die Gewinnung eines Auslösekriteriums für die Rückhaltemittel (AB) einer Integration, einer Fenster-Integration, einer Bandpassfilterung oder einer Kombination dieser Massnahmen unterworfen wird.

4. Rückhaltesystem nach einem der Ansprüche 1 bis 3, **dadurch gekennzeichnet, dass** der Ultraschallsensor (US) in einem ersten Airbagsteuergerät (ACM) angeordnet ist.

5. Rückhaltesystem nach einem der Ansprüche 1 bis 3, **dadurch gekennzeichnet, dass** der Ultraschallsensor (US) in einem zweiten, für die Insassensensierung zuständigen Airbagsteuergerät (AOS) angeordnet ist.

6. Rückhaltesystem nach einem der Ansprüche 1 bis 3, **dadurch gekennzeichnet, dass** der Ultraschallsensor (US) räumlich getrennt von dem ersten und zweiten Airbagsteuergerät (AOS, ACM)in dem Fahrzeug angeordnet ist.

7. Rückhaltesystem nach einem der Ansprüche 1 bis 6, **dadurch gekennzeichnet, dass** für das Ausgangssignal des Ultraschallsensors (US) eine Zeitschwelle (Zeitintervall ΔT) derart vorgesehen ist, dass ein Auslösekriterium für die Rückhaltemittel (AB) nur dann vorliegt, wenn der Schwellwert (S1) mindestens während des Zeitintervalls (ΔT) überschritten ist.

## Claims

1. Restraint system having restraint means, having at least one acceleration-sensitive sensor, and having at least one further sensor, the at least one further sensor being an electro-acoustic transducer embodied as an ultrasound sensor (US) which is sensitive to ultrasound waves produced in the event of an accident and from whose output signal a triggering criterion for the restraint means (AB) can be derived, **characterized in that** the electro-acoustic transducer is arranged in the interior of the vehicle.

2. Restraint system according to Claim 1, **characterized in that** a threshold value (S1) can be predefined for the output signal of the ultrasound sensor (US), and **in that** the event of said threshold value (S1) being exceeded is regarded as a triggering criterion for the restraint means (AB).

3. Restraint system according to Claim 1, **characterized in that** the output signal of the ultrasound sensor (US) undergoes integration, window integration, band pass filtering or a combination of these measures in order to obtain a triggering criterion for the restraint means (AB).

4. Restraint system according to one of Claims 1 to 3, **characterized in that** the ultrasound sensor (US) is arranged in a first airbag control unit (ACM).

5. Restraint system according to one of Claims 1 to 3, **characterized in that** the ultrasound sensor (US) is arranged in a second airbag control unit (AOS) which is responsible for sensing vehicle occupants.

6. Restraint system according to one of Claims 1 to 3, **characterized in that** the ultrasound sensor (US) is arranged in the vehicle such that it is spatially remote from the first and second airbag control units (AOS, ACM).

7. Restraint system according to one of Claims 1 to 6, **characterized in that** a time threshold (time interval ΔT) is provided for the output signal of the ultrasound sensor (US) in such a way that a triggering criterion for the restraint means (AB) is present only when the threshold value (S1) is exceeded at least during the time interval (ΔT).

## Revendications

1. Système de retenue comprenant des moyens de retenue, au moins un capteur sensible à l'accélération ainsi qu'au moins un autre capteur, dans lequel l'autre capteur est un convertisseur électroacoustique sous la forme d'un capteur à ultrasons (US) sensible aux ondes à ultrasons générées lors d'un accident et qui permet de dériver, à partir de son signal de sortie, un critère de déclenchement des moyens de retenue (AB),
**caractérisé en ce que**
le convertisseur électroacoustique est à l'intérieur d'un véhicule.

2. Système de retenue selon la revendication 1,
**caractérisé en ce qu'**
un seuil (S1) peut être prédéfini pour le signal de sortie du capteur à ultrasons (US) et le dépassement de ce seuil (S1) est exploité comme un critère de déclenchement des moyens de retenue (AB).

3. Système de retenue selon la revendication 1,
**caractérisé en ce que**
le signal de sortie du capteur à ultrasons (US) qui sert à obtenir un critère de déclenchement des moyens de retenue (AB) est soumis à une intégration, une intégration à fenêtres, un filtrage par filtre passe-bande ou une combinaison de ces mesures.

4. Système de retenue selon l'une des revendications 1 à 3,
**caractérisé en ce que**
le capteur à ultrasons (US) est dans un premier appareil de commande d'un coussin de sécurité gonflable (airbag) (ACM).

5. Système de retenue selon l'une des revendications 1 à 3,
**caractérisé en ce que**
le capteur à ultrasons (US) est dans un deuxième appareil de commande d'un coussin de sécurité gonflable (AOS) destiné à la détection des occupants.

6. Système de retenue selon l'une des revendications 1 à 3,
**caractérisé en ce que**
le capteur à ultrasons (US) est dans le véhicule et séparé dans l'espace des premier et deuxième appareils de commande de coussin de sécurité gonflable (AOS, ACM).

7. Système de retenue selon l'une des revendications 1 à 6,
**caractérisé en ce qu'**
un seuil temporel (intervalle de temps ΔT) est prévu pour le signal de sortie du capteur à ultrasons (US), avec un critère de déclenchement des moyens de retenue (AB) que si le seuil (S1) est dépassé au moins pendant l'intervalle de temps (ΔT).
